# EUROPÄISCHE PATENTSCHRIFT

(11) **EP 0 687 275 B1**
(45) Veröffentlichungstag und Bekanntmachung des Hinweises auf die Patenterteilung: **29.10.1997**
(21) Anmeldenummer: 94909009.6
(22) Anmeldetag: 21.02.1994
(51) Int. Cl.: C08F 8/06

(54) **VERFAHREN ZUR HERSTELLUNG VON POLYVINYLPYRIDIN-N-OXIDEN**
METHOD OF PREPARING POLYVINYL PYRIDINE-N-OXIDES
PROCEDE DE PREPARATION DE POLYVINYLPYRIDINE-N-OXYDES

(30) Priorität: 03.03.1993 DE 4306609
(43) Veröffentlichungstag der Anmeldung: 20.12.1995
(73) Patentinhaber: BASF Aktiengesellschaft, 67063 Ludwigshafen (DE)
(72) Erfinder: SCHADE, Christian, D-67061 Ludwigshafen (DE); BOECKH, Dieter, D-67117 Limburgerhof (DE); DETERING, Juergen, D-67117 Limburgerhof (DE)
(86) Internationale Anmeldenummer: EP9400490
(87) Internationale Veröffentlichungsnummer: WO9420549

(56) Entgegenhaltungen:
- DE-A- 1 495 819
- DE-A- 1 570 586
- US-A- 3 159 611

## Beschreibung

Die Erfindung betrifft ein Verfahren zur Herstellung von Polyvinylpyridin-N-oxiden durch Oxidieren von Polyvinylpyridinen mit wäßrigen Lösungen von Wasserstoffperoxid in Gegenwart von Säuren bei pH-Werten unterhalb von 7.

Aus der GB-A-1 097 450 ist die Herstellung von Polyvinylpyridin-N-oxid durch Oxidieren von Poly-2-vinylpyridin in Eisessig als Lösemittel mit einer 30 %igen wäßrigen Lösung von Wasserstoffperoxid bei 50°C bekannt. Die technische Durchführung eines solchen Verfahrens bereitet Schwierigkeiten, weil die Abtrennung der eingesetzten Carbonsäuren von den Polyvinylpyridin-N-oxiden problematisch ist und weil während der Herstellung instabile Persäuren entstehen, die detonationsfahig sind und nur unter besonderen Sicherheitsvorkehrungen gehandhabt werden können. Auf die Probleme bei der Verwendung von Peroxiessigsäure bei der Herstellung von N-Oxiden wird in der US-A-3 047 579, Zeilen 35-50 hingewiesen. Wie dort außerdem angegeben ist, verläuft die Bildung von N-Oxiden bei der Umsetzung von tertiären aromatischen Aminen mit Wasserstoffperoxid in wäßriger Lösung derart langsam, daß eine technische Herstellung nicht in Betracht kommt.

Gemäß der Lehre der US-A-3 047 579 werden tertiäre Amine mit Wasserstoffperoxid in Eisessig oder in wäßriger Lösung in Gegenwart von katalytischen Mengen von Säure bildenden Elementen der Gruppen 5b, 6b, 7b und 8 des Periodischen Systems oxidiert.

Der vorliegenden Erfindung liegt die Aufgabe zugrunde, ein Verfahren zur Oxidation von Vinylpyridin einpolymerisiert enthaltenden Polymeren zur Verfügung zu stellen, das technisch durchführbar ist.

Die Aufgabe wird erfindungsgemäß gelöst mit einem Verfahren zur Herstellung von Polyvinylpyridin-N-oxiden durch Oxidieren von Polyvinylpyridinen mit wäßrigen Lösungen von Wasserstoffperoxid in Gegenwart von Säuren, wenn man die Oxidation zusätzlich in Gegenwart von Oxiden oder Säuren von Elementen der Gruppen 5b, 6b, 7b und 8 des Periodischen Systems oder von Salzen dieser Säuren als Katalysator durchführt oder daß man die Oxidation in 40 bis 80 gew.-%igen wäßrigen Lösungen von mindestens zwei basischen Carbonsäuren oder von Polymerisaten monoethylenisch ungesättigter Carbonsäuren als Lösemittel gegebenenfalls in Abwesenheit der Katalysatoren vornimmt. Vorzugsweise verwendet man von Wolfram, Molybdän oder Vanadin abgeleitete Oxide, Säuren oder Salze als Katalysator.

Nach dem erfindungsgemäßen Verfahren können sowohl Homo- als auch Copolymerisate von Vinylpyridinen oxidiert werden. Die Vinylgruppe kann in 2-, 3- oder 4-Stellung am Pyridinring stehen. Die Herstellung von Homo- und Copolymerisaten aus diesen Monomeren gehört zum Stand der Technik. Copolymerisate von Vinylpyridin enthalten mindestens 5 Gew.-% Vinylpyridin einpolymerisiert. Als Comonomer eignen sich alle mit Vinylpyridin copolymerisierbaren monoethylenisch ungesättigte Monomeren beispielsweise Vinylester, wie Vinylacetat, Vinylpropionat und Vinylbutyrat, Styrol, α-Methylstyrol, Divinylbenzol, monoethylenisch ungesättigte Carbonsäuren, wie beispielsweise Acrylsäure, Methacrylsäure, Maleinsäure, Itaconsäure, Citraconsäure und Crotonsäure, Anhydride von monoethylenisch ungesättigten Carbonsäuren wie Maleinsäureanhydrid oder Itaconsäureanhydrid, Ester aus monoethylenisch ungesättigten Carbonsäuren und C₁- bis C₆-Alkoholen, N-Vinylpyrrolidon, N-Vinylcaprolactam, N-Vinylimidazol, N-Vinylformamid, N-Methyl-N-vinylacetamid, N-Vinylacetamid sowie quarternierte basische Vinylverbindungen wie z.B. N-Vinyl-N-methylimidazol und N-Alkylvinylpyridine mit 1 bis 12 C-Atomen in der Alkylgruppe.

Vorzugsweise werden Polymerisate von 4-Vinylpyridin oxidiert. Sämtliche Polyvinylpyridine können nach dem erfindungsgemäßen Verfahren in die entsprechenden N-Oxide überführt werden. Dies gilt sowohl für niedrigmolekulare als auch für sehr hochmolekulare Polyvinylpyridine. Geeignete Polyvinylpyridine haben K-Werte von 8 bis 350. Bevorzugt werden Polyvinylpyridine eingesetzt, die Molmassen von 1000 bis 300 000 haben. Solche Polymerisate haben K-Werte von 10 bis 100 (bestimmt nach H. Fikentscher in 1 %igen Lösungen in Ethanol bei 25°C). Die bei dem erfindungsgemäßen Verfahren eingesetzten wäßrigen Lösungen von Wasserstoffperoxid haben üblicherweise eine Wasserstoffperoxidkonzentration von 5 bis 90 %, vorzugsweise 20 bis 60 Gew.-%.

Die Oxidation erfolgt in Gegenwart von Säuren. Man kann anorganische Säuren wie Schwefelsäure oder Phosphorsäure oder organische Säuren wie Ameisensäure, Essigsäure, Propionsäure, Kokosfettsäure, Stearinsäure, Benzolsulfonsäure, p-Toluolsulfonsäure und/oder Alkylsulfonsäuren einsetzen.

Während Polyvinylpyridin gemäß dem Stand der Technik in Essigsäure/Wasserstoffperoxid-Lösungen mit Wassergehalten unterhalb von 15 Gew.-% und Essigsauregehalten über 50 Gew.-% oxidiert wird, beträgt der Wassergehalt des Reaktionsmediums bei dem erfindungsgemäßen Verfahren mindestens 20, vorzugsweise mindestens 25 Gew.-%. Als Carbonsäuren kommen außer den bereits genannten einbasischen Carbonsäuren mindestens zweibasische Carbonsäuren in Betracht, z.B. Oxalsäure, Bernsteinsäure, C₁- bis C₁₈-Alkylbernsteinsäuren und Alkenylbernsteinsäuren, Glutarsäure, Adipinsäure, Phthalsäure, Terephthalsäure, Weinsäure und Zitronensäure. Anstelle der freien Säuren können auch die Anhydride der Carbonsäuren eingesetzt werden, soweit diese zugänglich sind.

Als Säuren eignen sich außerdem wäßrige Lösungen von Polymerisaten monoethylenisch ungesättigter Carbonsäuren, z.B. Polymaleinsäure, Polyacrylsäure, Polymethacrylsäure, Copolymerisate aus Acrylsäure und Methacrylsäure, Copolymerisate aus Acrylsäure und Maleinsäure, Copolymerisate aus Acrylsäure und Itaconsäure und Copolymerisate aus Methacrylsäure und Maleinsäure. Die Copolymerisate können die genannten Comonomeren in beliebigen Verhältnissen enthalten. Homo- und Copolymerisate von monoethylenisch ungesättigten Carbonsäuren sind bekannt. Die Molmassen geeigneter Polymerisate können bis zu 50.000 betragen. Vorzugsweise verwendet man Homo- und Copolymerisate mit Molmassen bis zu 10.000. Bei Einsatz von polymeren Carbonsäuren können sich teilweise oder vollständig unlösliche Komplexe aus Polycarbonsäuren und Polyvinylpyridin bzw. Polyvinylpyridin-N-oxiden bilden. Die Ausfällung solcher Komplexe kann jedoch vollständig oder teilweise verhindert werden, wenn man den pH-Wert des Reaktionsgemisches auf Werte oberhalb von 4 anhebt. Die Polymer-Polymer-Komplexe können aber auch in Suspension oxidiert werden.

Die Oxidation von Polyvinylpyridin erfolgt gemäß den erfindungsgemäßen Verfahren vorzugsweise bei einem Wassergehalt im Reaktionsgemisch zu Beginn der Oxidation von mindestens 25 Gew.-%. Der Wassergehalt im Reaktionsgemisch bezieht sich immer auf den Gehalt zu Beginn der Reaktion. Je nach Konzentration des Wasserstoffperoxids, das als Oxidationsmittel verwendet wird, kommt es im Laufe der Oxidation zu einer Konzentrationsänderung bezüglich des Wassergehalts. Er sollte zu Beginn der Reaktion üblicherweise nicht oberhalb von 60 Gew.-% liegen. Bei niedrigen Konzentrationen an Säure, d.h. in dem Bereich von beispielsweise 1 bis 50 Gew.-% im Reaktionsgemisch, wird die Oxidation erfindungsgemäß in Gegenwart von Oxiden oder Säuren von Elementen der Gruppen 5b, 6b, 7b und 8 des Periodischen Systems oder von Salzen dieser Säuren als Katalysator durchgeführt. Als Katalysator bevorzugt sind von Wolfram, Molybdän oder Vanadin abgeleitete Oxide, Säuren oder Salze. Solche Katalysatoren und ihre Wirkungsweise werden in der eingangs angegebenen US-A-3 047 579, Spalte 4, beschrieben. Wie dort ebenfalls ausgeführt ist, werden auch die Heteropolyformen der Säuren der säurebildenden Elemente der 6. Gruppe des Periodischen Systems als Katalysator verwendet. Vereinfachend dargestellt bildet sich aus dem Wasserstoffperoxid und den geeigneten Katalysatoren in situ eine Perverbindung, die instabil ist und das eigentliche Oxidationsmittel darstellt. Bevorzugt eingesetzte Katalysatoren sind Natriumwolframat, Wolframatophosphorsäure, Wolframsäure und die entsprechenden Molybdänderivate wie Natriummolybdat, Molybdatophosphorsäure, Molybdänsäure oder deren Mischungen. Die Katalysatoren werden in Mengen von 0,005 bis 20, vorzugsweise 0,05 bis 2 Gew.-% berechnet Übergangsmetalle im Katalysator auf Polymer, eingesetzt. In den meisten Fällen kommt man mit Mengen von 0,1 bis 1 Gew.-% an Katalysatoren aus.

Die Oxidation wird in Anwesenheit von Säuren vorgenommen, weil sich dann nämlich die Vinylpyridin einpolymerisiert enthaltenden Polymerisate partiell oder gar vollständig im wäßrigen Reaktionsmedium lösen. Falls die Polyvinylpyridine, die oxidiert werden sollen, wasserunlöslich sind, suspendiert man das Polymer im wäßrigen Reaktionsmedium. Mit fortschreitender Oxidation des Polymeren löst es sich partiell oder vollständig im Reaktionsmedium.

Mit dem Oxidieren in Gegenwart von Katalysatoren vergleichbare Oxidationsgrade und Reaktionsgeschwindigkeiten werden bei einer Verfahrensvariante erreicht, bei der die Oxidation der Polyvinylpyridine in 40 bis 80 gew.-%igen wäßrigen Lösungen von mindestens 2 basischen Carbonsäuren oder in wäßrigen Lösungen gleicher Konzentration von Polymerisaten monoethylenisch ungesättigter Carbonsäuren als Lösemittel vorgenommen wird. Von den mindestens 2 basischen Carbonsäuren kommen vor allem Zitronensäure und gesättigte aliphatische C₂- bis C₁₂-Dicarbonsäuren in Betracht. Wenn man die Oxidation mit 40 bis 80 gew.-%igen wäßrigen Reaktionslösungen startet, die vorgelegt werden und zu denen man Wasserstoffperoxid zugibt, erreicht man relativ hohe Oxidationsgrade der Polyvinylpyridine und ausreichende Reaktionsgeschwindigkeiten. Dies ist insbesondere dann der Fall, wenn die Oxidation in 55 bis 75 gew.-%igen wäßrigen Lösungen von mindestens 2 basischen Carbonsäuren oder von Polymerisaten monoethylenisch ungesättigter Carbonsäuren durchgeführt wird. Die obengenannten Katalysatoren auf Basis von Oxiden oder Säuren von Elementen der Gruppen 5b, 6b, 7b und 8 des Periodischen Systems oder von Salzen dieser Säuren können jedoch auch dann angewendet werden, wenn man die Reaktion in 40 bis 80 gew.-%igen Lösungen von mindestens 2 basischen Carbonsäuren oder von wäßrigen Lösungen von Polymerisaten monoethylenisch ungesättigter Carbonsäuren als Lösemittel durchführt. In diesen Fällen erzielt man eine weitere Erhöhung des Oxidationsgrads und eine Beschleunigung der Oxidationsreaktion. Die Oxidation erfolgt vorzugsweise in Gegenwart von 0,1 bis 1 Gew.-% Natriumwolframat, Wolframatophosphorsäure, Wolframsäure oder den entsprechenden Molybdänderivaten.

Die Oxidation wird bei Temperaturen von 20 bis 140, vorzugsweise 50 bis 120°C vorgenommen. Bei Temperaturen oberhalb 100°C erfolgt die Reaktion in Druckapparaturen bei erhöhtem Druck. Die Konzentration des Polymeren im Reaktionsgemisch kann zwischen 5 und 70 Gew.-% betragen und liegt meistens in dem Bereich von 20 bis 50 Gew.-%. Nach dem erfindungsgemäßen Verfahren erhält man Polyvinylpyridin-N-oxide, die vorzugsweise Molekulargewichte in dem Bereich von 1000 bis 300 000 und K-Werte von 8 bis 80 haben (bestimmt nach H. Fikentscher in 5 %iger wäßriger Kochsalzlösung bei einer Polymerkonzentration von 1 Gew.-%). Die bei dem erfindungsgemäßen Verfahren eingesetzten Polyvinylpyridine werden bis zu 100, vorzugsweise 50 bis 98 % oxidiert. Die Bestimmung des Oxidationsgrads kann beispielsweise durch quantitative Auswertung der N-O-Schwingungsbanden bei 1478 bis 1494 cm⁻¹ im Infrarotspektrum (KBr-Pressling) unter Verwendung eines internen Standards erfolgen.

Die erfindungsgemäß hergestellten oxidierten Homo- und Copolymerisate von Vinylpyridinen sind beispielsweise als Therapeutikum zur Behandlung von Silikose geeignet.

Die in den Beispielen angegebenen K-Werte wurden nach H. Fikentscher, Cellulose-Chemie, Band 13, 58-64 und 71-74 (1932) in 5 %iger wäßriger Natriumchloridlösung bei einer Polymerkonzentration von 1 Gew.-% und einer Temperatur von 25°C bestimmt. Sofern andere Lösemittel verwendet wurden, ist dies in den Beispielen angegeben.

### Beispiel 1

In einem Planschliffkolben wurden 150 g Wasser, 90 g 4-Vinylpyridin und 1,8 g Polyvinylpyrrolidon mit einem K-Wert von 90, gemessen in 1 %iger wäßriger Lösung, unter Rühren gelöst und unter Stickstoff auf 80°C aufgeheizt. Sobald diese Temperatur erreicht war, wurde ein Zulauf von 1,4 g 4,4'-Azobis(4-cyanopentansäure) in 50 g Wasser während 1 h zur Mischung getropft. Das Reaktionsgemisch wurde 4 h bei dieser Temperatur gerührt und anschließend auf 60°C abgekühlt. Bei dieser Temperatur wurden 65 g Essigsäure zugesetzt und der Ansatz gerührt, bis eine homogene Lösung entstanden war. Nach erneutem Aufheizen auf 80°C wurden 1,63 ml konzentrierte Schwefelsäure und 4,5 ml einer 1 %igen wäßrigen Lösung von Wolframatophosphorsäure zum Ansatz gegeben und anschließend wurden 63 g einer 50 %igen Lösung von Wasserstoffperoxid während 6 h zugetropft. Nach weiteren 2 h bei dieser Temperatur wurde die Lösung für 1,5 h einer Wasserdampfdestillation unterworfen und anschließend gefriergetrocknet. Das Polymer besaß einen K-Wert von 48,3. Der Oxidationsgrad betrug 87 %.

### Beispiel 2

28,5 g Poly-4-vinylpyridin mit einem K-Wert von 24,0 (gemessen als 1 %ige Lösung in Ethanol) wurden in 21,5 g Eisessig gelöst und zu einer Lösung von 0,14 g Wolframsäure in 64 ml Wasser gegeben. Die Lösung wurde auf 80°C aufgeheizt und 27,7 g 50 %iges Wasserstoffperoxid innerhalb 1 h bei 80°C zudosiert. Man ließ weitere 4 h bei 80°C reagieren, setzte dann - um restliches Wasserstoffperoxid zu zerstören - 200 mg Palladium auf Aktivkohle zu und rührte weitere 4 h. Nach Filtration wurde das Produkt gefriergetrocknet. Der Oxidationsgrad betrug 92 %, der K-Wert (gemessen als 1 %ige Lösung in 5 %iger NaCl-Lösung) betrug 25,9.

### Beispiel 3

28,5 g Poly-4-vinylpyridin mit einem K-Wert von 24,0 (gemessen als 1 %ige Lösung in Ethanol) wurden in 21,5 g Eisessig gelöst und zu einer Lösung von 0,14 g Molybdänsäure in 64 ml Wasser gegeben. Die Lösung wurde auf 80°C aufgeheizt und 27,7 g 50 %iges Wasserstoffperoxid innerhalb 1 h bei 80°C zudosiert. Man ließ weitere 4 h bei 80°C reagieren, setzte dann 50 mg Palladium 5 %ig auf Aktivkohle zu und rührte weitere 4 h. Nach Filtration wurde das Produkt gefriergetrocknet. Der Oxidationsgrad betrug 84 %, der K-Wert (gemessen als 1 %ige Lösung in 5 %iger NaCl-Lösung) betrug 25,1.

### Beispiel 4

28,5 g Poly-4-vinylpyridin mit einem K-Wert von 24,0 (gemessen als 1 %ige Lösung in Ethanol) wurden in 21,5 g Eisessig gelöst und zu einer Lösung von 0,14 g Molybdatophosphorsaure in 64 ml Wasser gegeben. Die Lösung wurde auf 80°C aufgeheizt und 27,7 g 50 %iges Wasserstoffperoxid innerhalb 1 h bei 80°C zudosiert. Man ließ weitere 4 h bei 80°C reagieren, setzte dann 50 mg Palladium 5 %ig auf Aktivkohle zu und rührte weitere 4 h. Nach Filtration wurde das Produkt gefriergetrocknet. Der Oxidationsgrad betrug 84 %, der K-Wert (gemessen als 1 %ige Lösung in 5 %iger NaCl-Lösung) betrug 25,0.

### Beispiel 5

100 g Poly-4-vinylpyridin mit einem K-Wert von 30,7 (gemessen als 1 %ige Lösung in Ethanol) wurden in 133 ml Wasser suspendiert und unter portionsweisem Zusatz von 267,0 g Citronensäuremonohydrat bei 115°C (Badtemperatur) innerhalb 1 h gelöst. Zu dieser Lösung wurden 3 ml konzentrierte Schwefelsäure gegeben und innerhalb 1 h bei 115°C (Bad) 126,4 g 30 %iges Wasserstoffperoxid zudosiert. Anschließend ließ man 3 h bei 115°C nachreagieren. Die erhaltene Lösung wurde zur Charakterisierung gefriergetrocknet. Der Oxidationsgrad betrug 57 %; der K-Wert (gemessen als 1 %ige Lösung in 5 %iger NaCl-Lösung) betrug 28,9.

### Beispiel 6

240 g Poly-4-vinylpyridin mit einem K-Wert von 24,0 (gemessen als 1 %ige Lösung in Ethanol) wurden mit einer Lösung von 24 g Citronensäure in 136 g Wasser bei 90 bis 100°C suspendiert, wobei das Polymer sich größtenteils löste. 2,4 g Wolframatophosphorsäure wurden zugesetzt und bei 80 bis 85°C innerhalb 3 h 233 g 50 %iges Wasserstoffperoxid zudosiert, wobei das Polymer vollständig in Lösung ging. Die Lösung wurde 4 h bei 80 bis 85°C gehalten. Anschließend wurden 50 mg Palladium 5 %ig auf Aktivkohle zugesetzt und weitere 2 h bei 80 bis 85°C intensiv gerührt. Die Lösung wurde filtriert und zur Charakterisierung gefriergetrocknet. Der Oxidationsgrad betrug 76 %, der K-Wert (gemessen als 1 %ige Lösung in 5 %iger NaCl-Lösung) betrug 22,3.

### Beispiel 7

### Kinetik des Peroxidverbrauchs bei der Oxidation von Poly-4-vinylpyridin

Die Reaktionsgeschwindigkeit der Oxidation von Polyvinylpyridin mit Wasserstoffperoxid in wäßrig/essigsaurem Medium wurde bei verschiedenen Katalysatormengen bei 80°C untersucht, indem die Abnahme des Oxidationsmittelgehaltes mit der Zeit jodometrisch verfolgt wurde. Die jodometrische Bestimmung des Restperoxid-Gehalts erfolgte nach Jander, Jahr und Knoll, Maßanalyse, W. de Gruyter Verlag, Berlin, 1973, S. 92-121 durch Iodidzugabe und Titration des freigesetzten Jods mit Thiosulfatlösung. Die Beschleunigung der Reaktion durch wachsende Mengen Wolframatophosphorsäure ist aus den in der Tabelle angegebenen Werten zu erkennen.

**Tabelle**

| Rest-Peroxidgehalt [%] in der Reaktionsmischung von Poly-4-vinylpyridin mit K-Wert 42 in 15 %iger Lösung in Wasser/Essigsäure (66:33) bei 80°C in Abhängigkeit von der Katalysatormenge (Wolframatophosphorsäure) | | | | |
|---|---|---|---|---|
| Katalysatormenge [Gew.-%] | Reaktionszeit | | | |
| | 0 | 30 min | 45 min | 60 min |
| 0 | 100 | 88 | 83 | 77 |
| 0,5 | 100 | 80 | 58 | 42 |
| 1,0 | 100 | 45 | 17 | 4,2 |
| 5,0 | 100 | 34 | 8,2 | 0,4 |

## Patentansprüche

1. Verfahren zur Herstellung von Polyvinylpyridin-N-oxiden durch Oxidieren von Polyvinylpyridinen mit wäßrigen Lösungen von Wasserstoffperoxid in Gegenwart von Säuren, dadurch gekennzeichnet, daß man die Oxidation zusätzlich in Gegenwart von Oxiden oder Säuren von Elementen der Gruppen 5b, 6b, 7b und 8 des Periodischen Systems oder von Salzen dieser Säuren als Katalysator durchführt oder daß man die Oxidation in 40 bis 80 gew.%igen wäßrigen Lösungen von mindestens zweibasischen Carbonsäuren oder von Polymerisaten monoethylenisch ungesättigter Carbonsäuren als Lösemittel gegebenenfalls in Abwesenheit der Katalysatoren vornimmt.

2. Verfahren nach Anspruch 1, dadurch gekennzeichnet, daß man von Wolfram, Molybdän oder Vanadin abgeleitete Oxide, Säuren oder Salze als Katalysator einsetzt.

3. Verfahren nach Anspruch 1 oder 2, dadurch gekennzeichnet, daß man die Oxidation in 55 bis 75 gew.%igen wäßrigen Lösungen von mindestens zweibasischen Carbonsäuren oder von Polymerisaten monoethylenisch ungesättigter Carbonsäuren durchführt.

4. Verfahren nach einem der Ansprüche 1 bis 3, dadurch gekennzeichnet, daß man die Oxidation in wäßrigen Lösungen von Citronensäure und/oder gesättigten aliphatischen C₂- bis C₁₂-Dicarbonsäuren durchführt.

5. Verfahren nach Anspruch 4, dadurch gekennzeichnet, daß die Oxidation in Gegenwart von 0,1 bis 1 Gew.-% Natriumwolframat, Wolframatophosphorsäure, Wolframsäure, Natriummolybdat, Molybdatophosphorsäure, Molybdansaure oder deren Mischungen durchgeführt wird.

## Claims

1. A process for preparing polyvinylpyridine N-oxides by oxidizing polyvinylpyridines with aqueous solutions of hydrogen peroxide in the presence of acids, wherein the oxidation is additionally carried out in the presence of oxides or acids of elements of Groups 5b, 6b, 7b and 8 of the Periodic Table or of salts of these acids as catalyst, or the oxidation is carried out in from 40 to 80% by weight aqueous solutions of at least dibasic carboxylic acids or of polymers of monoethylenically unsaturated carboxylic acids as solvent in the presence or absence of the catalysts.

2. A process as claimed in claim 1, wherein oxides, acids or salts derived from tungsten, molybdenum or vanadium are used as catalyst.

3. A process as claimed in claim 1 or 2, wherein the oxidation is carried out in from 55 to 75% by weight aqueous solutions of at least dibasic carboxylic acids or of polymers of monoethylenically unsaturated carboxylic acids.

4. A process as claimed in any of claims 1 to 3, wherein the oxidation is carried out in aqueous solutions of citric acid and/or saturated aliphatic C₂-C₁₂-dicarboxylic acids.

5. A process as claimed in claim 4, wherein the oxidation is carried out in the presence of from 0.1 to 1% by weight of sodium tungstate, phosphotungstic acid, tungstic acid, sodium molybdate, phosphomolybdic acid, molybdic acid or mixtures thereof.

## Revendications

1. Procédé de préparation de N-oxydes de polyvinylpyridine par oxydation de polyvinylpyridines avec des solutions aqueuses d'hydroperoxydes en présence d'acides, caractérisé en ce que l'on effectue l'oxydation en présence d'oxydes ou d'acides d'éléments des groupes 5b, 6b, 7b et 8 de la classification périodique des éléments ou de sels de ces acides, en tant que catalyseur, ou bien en ce que l'on effectue l'oxydation dans des solutions aqueuses à 40-80 % en poids d'acides carboxyliques ayant au moins deux acidités ou de polymères d'acides carboxyliques à insaturation monoéthylénique en tant que solvant, éventuellement en l'absence de catalyseur.

2. Procédé selon la revendication 1, caractérisé en ce que l'on utilise des oxydes, des acides ou des sels dérivés du tungstène, du molybdène ou du vanadium, en tant que catalyseur.

3. Procédé selon la revendication 1 ou 2, caractérisé en ce que l'on effectue l'oxydation dans des solutions aqueuses à 55-75 % en poids d'acides carboxyliques ayant au moins deux acidités ou de polymères d'acides carboxyliques à insaturation monoéthylénique.

4. Procédé selon l'une quelconque des revendications 1 à 3, caractérisé en ce que l'on effectue l'oxydation dans des solutions aqueuses d'acide citrique et/ou d'acides dicarboxyliques en C₂-C₁₂ aliphatiques saturés.

5. Procédé selon la revendication 4, caractérisé en ce que l'on effectue l'oxydation en présence de 0,1 à 1 % en poids de tungstate de sodium, d'acide tungstatophosphorique, d'acide tungstique, de molybdate de sodium, d'acide molybdatophosphorique, d'acide molybdique ou leurs mélanges.
